(19) Europäisches Patentamt
European Patent Office
Office européen des brevets

(11) **EP 1 750 867 B1**

(12) **EUROPEAN PATENT SPECIFICATION**

(45) Date of publication and mention
of the grant of the patent:
**16.06.2010 Bulletin 2010/24**

(51) Int Cl.:
***B21D 13/00*** *(2006.01)*

(21) Application number: **05733470.8**

(22) Date of filing: **11.04.2005**

(86) International application number:
**PCT/EP2005/051580**

(87) International publication number:
**WO 2005/118174 (15.12.2005 Gazette 2005/50)**

(54) **PLEATED SINTERED METAL FIBER MEDIUM**

GEFÄLTELTES SINTERMETALLFASERMEDIUM

MILIEU PLISSE EN FIBRES DE METAL FRITTEES

(84) Designated Contracting States:
**AT BE BG CH CY CZ DE DK EE ES FI FR GB GR HU IE IS IT LI LT LU MC NL PL PT RO SE SI SK TR**

(30) Priority: **01.06.2004 EP 04102431**

(43) Date of publication of application:
**14.02.2007 Bulletin 2007/07**

(73) Proprietor: **NV Bekaert SA**
**8550 Zwevegem (BE)**

(72) Inventor: **ROMMENS, Pieter**
**B-8551 Heestert (BE)**

(74) Representative: **Messely, Marc et al**
**N.V. Bekaert S.A.**
**Industrial Property Department - 6030**
**Bekaertstraat 2**
**8550 Zwevegem (BE)**

(56) References cited:
**US-B1- 6 276 045**

## Description

## Field of the invention.

The present invention relates to sintered metal fiber media, and more in particular to pleated sintered metal fiber media and a method for pleating sintered metal fiber media.

## Background of the Invention.

Sintered metal fiber medium is well known in the art. More in particular, it is well known for its use as liquid or gas filtration, such as e.g. polymer and ink jet filtration or hot gas filtration, e.g. soot filtration in diesel exhaust filtration applications.

For most of the applications for which sintered metal fiber medium is used, it is of importance to provide as much filter medium as possible per volume of the filter cartridge in which the medium is used. It is known in the art to pleat the sintered metal fiber medium for making "accordion"-like pleated media.

However, the sintered metal fiber media have the disadvantage that it is difficult to pleat to U-shapes, having a small angle between the two legs, e.g. an angle smaller than 90° or in extreme, having legs being essentially parallel to each other, this is an angle being 0°.

US6276045B1 describes a method to pleat sintered metal fiber medium, meanwhile avoiding deleterious deformation of the sintered metal fiber medium at the flanks of the pleats.

Pleating of sintered metal fiber media may cause rupture of the sintering points at the outer side of the bend, especially when the angle over which the sintered metal fiber medium is bend, is larger than 120 °. For this reason, bends over an angle of less than 100° are usually avoided, or additional means are provided at the outer bend side of the medium to avoid such ruptures. Such means may be metal scrims or grid.

In case ruptures of sintering points occur, the mechanical properties of the sintered metal fiber medium are changed too much at the locations of the fiber ruptures to guarantee sufficient strength during use of the pleated sintered metal fiber medium.

Sintered metal fiber medium may be pleated while the angles between the legs are kept relatively large.

In this case, in which the pleats have the tendency to look more like "V shapes" or providing more "zigzag= like sintered metal fiber medium, the increase of sintered metal fiber medium per volume unit of filtration cartridge is limited.

Sintered metal fiber mediua being pleated according to a U-shaped pleat having a required small angle between the planes of the legs, such as smaller than 90°, or even having essentially parallel legs can be obtained using a bending part which provides a large distance between the legs at the coupling with the bending part, in which bending part having too small bending radii are avoided. In case the distance is made too small, e.g. smaller than 5 times the thickness of the medium, the sintered metal fiber medium at the inner side of the U-shape, has the tendency to upset in an uncontrolled way, which may even lead to rupture of the sintered structure at this inner side.

But due to the larger distances to be chosen, an increase of sintered metal fiber medium per volume unit of the filtration cartridge is limited due to these large distances between the legs of the U-shape.

In diesel soot filtration applications, the trapped soot may be removed from the sintered metal fiber medium filter by heating the medium using its electrical conductivity. Electrical current is supplied to, and conducted by the medium from one end of the medium to the other. Due to the joule effect, the sintered metal fiber medium is heated and the combustible soot is ignited, thus removed as the carbon and other C-comprising particulates are converted into $CO_2$. In case the sintered metal fiber medium is used for such electrically regenerating filtration purposes and when ruptures of sintering points tend to occur, the pleated sintered metal fiber medium has the tendency to bum through at the location of fiber ruptures due to a too large current passing through the reduced mount of sintered fibers at the ruptures.

## Summary of the invention.

It is an object of the present invention to provide a pleated sintered metal fiber medium overcoming the problems of prior art.

It is also an object of the present invention to provide a method to pleat sintered metal fiber medium avoiding rupture of the sintering points at the outer side of the bend.

It is also an object of the present invention to provide a method to pleat sintered metal fiber medium, providing the sintered metal fiber medium having a little angle between the two legs of the pleat, this is less than 90°, or even having essentially parallel legs, avoiding rupture of the sintered structure at the outer surface of the bending part and having controlled upsetting at this inner side of the U-shape, avoiding rupture of the sintered structure at this inner side of the U-shape..

A sintered metal fiber medium as subject of the invention comprising at least one pleat, which pleat comprising a first leg being present according to a first plane, and a second leg being present according to a second plane. The first plane and the second plane intersect along an intersection line at a dihedral angle θ. The pleat comprises a bending part for coupling the first and the second leg. The medium has an average thickness at the legs of Tl. The bending part comprises at least a first distinct linear zone, which zone is substantival parallel to the intersection line, in which first linear zone the medium has a minimum thickness Tb, smaller than Tl. A sintered metal fiber medium as subject of the invention is characterized in that Tb is smaller than 0.5 times Tl,

more preferred smaller than or equal to 0.45 times Tl or even smaller than or equal to 0.4 times Tl.

So in the linear zone or zones of the bending part, the thickness of the medium is reduced.

The term "minimum thickness" is to be understood at the smallest thickness which is measured in the linear zone over which the thickness of the medium is reduced.

It was further found that the width W of the linear zone, over which width the medium thickness is reduced to some extent, preferably is equal or more than Tl-Tb, and more preferred equal or more than 1.5 times Tl-Th or even equal or more than 1.75 times Tl-Tb such as equal to or more than 2 times Tl-Th. The width W is measured as the average distance between the two edges of the linear zone when the two planes of the two legs are aligned.

It was found that such sintered metal fiber medium as subject of the invention can be pleated more easily using this linear zone as a bending axis, providing two legs which are present according to two intersecting planes, which intersect at a dihedral angle smaller than 180 ° and preferably larger than 90°, without the risk of obtaining cracks or rupture of the sintered metal fiber medium at the outer surface of the pleat.

The bending part may comprise only one linear zone in which the medium thickness is reduced to a minimum thickness Tb according to the present invention.

As an alternative, the bending part may comprise two linear zones, which are substantially parallel to each other, which zones having preferably a substantially equal minimum thickness

Although in case of such two substantially parallel liner zones, preferably a dihedral angle θ smaller than 90° may be obtained between the two intersecting planes defined by the legs, a dihedral angle θ between 180° and 90° is possible as well.

The dihedral angle θ is defined as the angle between the planes defined by the inner surface of the legs between which two legs one, two or more substantially parallel linear zones are present in order to obtain one pleat of the sintered metal fiber medium..

Also more than two linear zones with reduced thickness may be used to provide the pleat in the sintered metal fiber medium as subject of the invention. It was noticed that, in case more than one linear zone with reduced thickness is used, during and after bending, the medium present between adjacent linear zones of the bending part may show an increased medium thickness. This due to upsetting of the fibers in the medium present between the linear zones.

It was found that such upsetting may be avoided or limited and controlled, when the distance D between adjacent linear zones in the bending part is chosen at least equal or larger than the largest of the width W of the first zone and the width of the second zone. D however may be however in the range from W to 5 times Tl, or even in the range from W to 4 times Tl such as in the range from W to 3 times Tl, e.g. in the range from W to 2 time Tl. Therefore, the sintered metal fiber medium may be provided with U-shaped pleats having flanks of media being doser to each other as in known from prior art, and upsetting at the inner side of the U-shape in a controlled, uniform way without causing the sintered structure to break at this side, as well as at the outer side of the pleat.. The distance D is measured as the average distance between the edges of the first linear zones, and the edge of the second linear zone, which edges being adjacent to the other, when the two planes of the two legs are aligned.

Surprisingly it was found that for all sintered metal fiber medium as subject of the Invention, the fibers at the outer surface of the pleat does not rupture or protrude out of this outer surface for sintered metal fiber media as subject of the invention. Further, only a small part of the medium is used to make the bend.

As substantially no fibers break at the outer surface of the bend, in case the sintered metal fiber media are used for electrically heated media, e.g. electrically regenerated soot filters, no bum through are noticed.

An other advantage is that, in case using more than one linear zone with reduced thickness, the curvature of the bend can easily be shaped by selectively choosing the locations of the different linear zones. Precisely located U-shapes with substantially parallel planes of the legs (dihedral angel θ being substantially equal to 0°) may be provide.

Such sintered metal fiber medium can be obtained by using a method to pleat a sintered metal fiber medium as subject of the invention.

The method as subject of the invention to pleat a sintered metal fiber medium, comprises the steps of

- Providing a sintered metal fiber medium having a thickness Tl;
- Reducing the medium thickness over at least a first linear zone to a thickness Tb, Tb being the minimum thickness measured at the linear zone, Tb being smaller than 0.5 times Tl;
- Bend the medium parts present at both sides of the linear zone to the same side of the medium, using the linear zone as bending axes, In order to obtain a first legs being present according to a first plane and a second leg being present according to a second plane, the first and second plane intersecting along an intersection line at a dihedral angle θ.

It is understood that the reduction of the thickness at at least this first line to a minimum thickness Tb is preferably such that Tb is less than or equal to 0.45 times Tl or even less than or equal to 0.4 times Tl, wherein Tl is the average thickness of the medium at the legs of the pleat.

This thickness reduction according to a step of the methods as subject of the invention can be done in several ways, e.g. by pressing a line-shaped die into the sintered metal fiber medium at one side of the sintered metal fiber medium. Alternatively, a rotatable wheel can be pressed onto one side of the sintered metal fiber medium, and moved according to a first line on the surface of the sintered metal fiber medium, while it is pressed into the sintered metal fiber medium. If required, a second, substantially parallel line may be provided in a similar way, using the same or a second wheel. Alternatively, in case two parallel lines are required, a rotatable wheel having two parallel nbs along the circumference of the wheel ay be used to reduce the thickness at the two linear zones.

In case of two linear zones, between the two zones, a part of the sintered metal fiber medium is defined, which is to function as the bending part of the sintered metal fiber medium which will be obtained after executing the bending step. This part has a with equal to the distance D between the adjacent linear zones.

In case of two linear zones, the width of the first and the width of the second zone may be substantially equal to each other.

A linear zone is obtained which has a with W, and which has a minimum thickness of the medium Tb. It was found that preferably W being equal or larger than Tl-Tb is chosen. Even more preferred, W is equal or more than 1.5 times Tl-Tb or even equal or more than 1.75 times Tl-Tb such as equal to or more than 2 times Tl-Tb. This applies for both in case only one linear zone is used. This applies as well for one of the two linear zones in case two such linear zones are used. However, preferably this applies for both linear zones in case two such linear zones are used.

In case only one linear zone is used, although a dihedral angle $\theta$ smaller than 90° may be obtained, preferably the dihedral angle $\theta$ between 180° and 90° is provided by the bending step.

In order to obtain pleats having two legs which plane of these legs are under a dihedral angle $\theta$ even smaller than 90° this is between 90° and 0°, at least two linear zones being substantially parallel to each other are used.

Preferably, the distance D between the two lines is chosen larger than the width W of the linear zones. D however may be however in the range from W to 5 times Tl, or even in the range from W to 4 times Tl such as in the range from W to 3 times Tl, e.g. in the range from W to 2 time Tl. The distance D is measured as the average distance between the edges of the first linear zones, and the edge of the second linear zone, which edges being adjacent to the other, when the two planes of the two legs are aligned.

Surprisingly it was found that, when such method is used to pleat a sintered metal fiber medium, the pleated sintered metal fiber medium can be pleated providing a pleat with two legs being under a dihedral angle preferably in the range of 180° to 90° at the intersection, for which the fibers at the outer surface of the pleat does not rupture or protrude out of this outer surface. This meanwhile using only a small part of the medium is used to make the bend.

Sintered metal fiber medium as subject of the invention may be provided using any known metal fiber, The metal fibers are for example made of steel such as stainless steel. Preferred stainless steel alloys are AISI 300 or AISI 400-serie alloys, such as AISI 316L or AISI 347, or alloys comprising Fe, Al and Cr, stainless steel comprising Chromium, Aluminum and/or Nickel and 0.05 to 0.3 % by weight of Yttrium, Cerium, Lanthanum, Hafnium or Titanium, such as e.g. DIN 1.4767 alloys or Fecralloy®, are used. Also Cupper or Copper-alloys, or Titanium or Titanium alloys may be used.

The metal fibers can also be made of Nickel or a Nickel alloy or Aluminum or an Aluminum-alloy.

Metal fibers may be made by any presently known metal fiber production method, e.g. by bundle drawing operation, by coil shaving operation as described in JP3083144, by wire shaving operations (such as steel wool) or by a method providing metal fibers from a bath of molten metal alloy.

The metal fibers used to provide the sintered metal fiber medium are characterized in having an equivalent diameter Df. With equivalent diameter of a metal fiber is meant the diameter of an imaginary circle having the same surface as the surface of a radial cross section of the fiber.

Preferably the equivalent diameter Df of the metal fibers is less than 100$\mu$m such as less than 65$\mu$m, more preferably less than 36$\mu$m such as 35$\mu$m, 22$\mu$m or 17$\mu$m. Possibly the equivalent diameter of the metal fibers is less than 15$\mu$m, such as 14$\mu$m, 12$\mu$m or 11 $\mu$m, or less than 9$\mu$m such as e.g. 8$\mu$m. The equivalent diameter Df of the metal fibers may even be less than 7$\mu$m or less than 6$\mu$m, e.g. less than 5$\mu$m, such as 1$\mu$m, 1.5$\mu$m, 2$\mu$m, 3$\mu$m, 3.5$\mu$m, or 4$\mu$m.

The average thickness of the sintered metal fiber medium is preferably less than 5mm, such as less than 2.5 mm or less than 2 mm.

The sintered metal fiber medium may have mechanical properties in a wide range. As an example, the porosity of the metal fiber medium as subject of the invention may vary between 50% and 99.9%, such as more preferred between 60% and 95%.

The *term* "*porosity*" P is to be understood as

$$P = 100 - d$$

wherein

d = (weight of 1 m$^3$ sintered metal fiber medium) / (SF)

wherein

SF = specific weight per m$^3$ of alloy out of which the metal fibers of the sintered metal fiber medium are provided.

The sintered metal fiber medium may comprise one or more layers of mutually equal or different metal fibers. The different layers may vary in thickness, weight per surface unit, porosity, differences in metal fibers such as alloys, equivalent diameters, and many more.

It is understood that the number of pleats in a sintered metal fiber medium as subject of the invention may vary over a large extent, and can be chosen according to the intended use of the sintered metal fiber medium. The shape of the pleats, and the length of the legs between adjacent pleas are to be equal for al bends in the sintered metal fiber medium.

Some embodiments of present invention will hereafter be described into more details.

**Brief description of the drawings.**

The invention will now be described into more detail with reference to the accompanying drawings wherein

> FIGURE 1 a and FIGURE 1b, FIGURE 2 and FIGURE 3a and FIGURE 3b show schematically a sintered metal fiber medium as subject of the invention. FIGURE 4a, FIGURE 4b and FIGURE 4c, FIGURE 5a, FIGURE 5b and
> FIGURE 5c and FIGURE 6a, FIGURE 6b and FIGURE 6c show schematically a method for providing a sintered metal fiber medium as subject of the invention.

**Description of the preferred embodiments of the invention.**

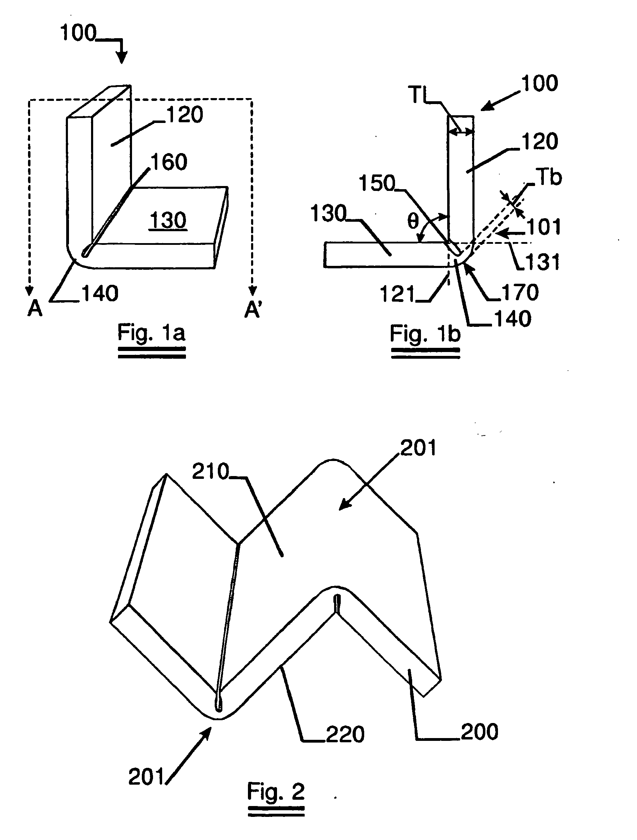

A sintered metal fiber medium 100 as subject of the invention comprising one pleat 101 is schematically shown in FIGURE 1a and FIGURE 1b. FIGURE 1b is a cross section of the sintered metal fiber medium from FIGURE 1a, according to the plane AA'.
The pleat 101 comprises a first leg 120, a second leg 130 and a bending part 140. The first leg 120 is present according to a plane 121 and the second leg 130 is present according to a second plane 131. At the intersection 150 of the planes 121 and 131, intersecting according to an intersection line, a dihedral angle $\theta$ is measured.

At the legs 120 and 130, the sintered metal fiber medium has an average medium thickness Tl. As shown In FIGURE 1a, at the bending part of the pleat, a linear zone 160 is present. In this zone a minimal thickness Tb can be measured, which minimal thickness Tb is preferable substantially equal for each cross section perpendicular to the length of the linear zone.

As an example, a sintered metal fiber medium comprising bundle drawn stainless steel fibers out of AISI 316L alloy with a thickness Tl of 1.35mm was provided with one pleat which comprises a bending zone, in which the thickness was reduced by pressing a wire rod with diameter 2mm in the medium over a depth of 0.95mm.

The width W of the linear zone is 1.99mm. The cross section of the bending zone 140 show the imprint of the circular circumference of the wire rod. Tb measured In the linear zone 160 is 0.4mm. The metal fiber medium 100 could be bend easily providing a dihedral angle $\theta$ between the planes 121 and 131 defined by the two legs 120 and 130, which $\theta$ ranges from 180°to 80°, without creation of cracks at the outer surface 170 of the medium in the bending part. Similar results were obtained when Tb was 1.05mm to 1.25 mm. For these embodiments, W is equal to 2mm.

An embodiment was provided using a sintered metal fiber medium comprising bundle drawn stainless steel fibers out of AISI 316L alloy with a thickness Tl of 2.1 mm. The medium was provided with a pleat which comprises a bending zone, in which the thickness was reduced by pressing a wire rod with diameter 2mm in the medium over a depth of 1 mm or more. The width W of the linear zone is 2mm. The cross section of the bending zone 140 show the imprint of the circular circumference of the wire rod. 1b measured in the linear zone 160 is 1 mm or less. The metal fiber medium 100 could be bend easily providing a dihedral angle $\theta$ between the planes 121 and 131 defined by the two legs 120 and 130, which $\theta$ ranges from 180°to 90°, without creation of cracks at the outer surface 170 of the medium in the bending part.

As shown in FIGURE 2, the pleats 201 which are identical to the pleats in FIGURE 1a and FIGURE 1b, can be used to provide a zigzag shaped sintered metal fiber medium 200. This by providing the pleats alternating on the first side 210 and second side 220 of the sintered metal fiber medium 200.

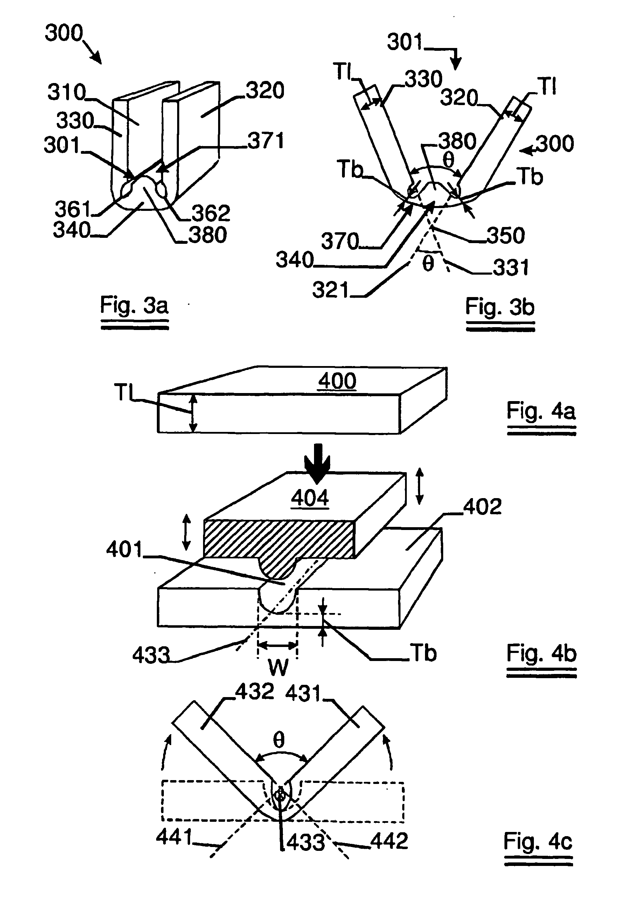

A sintered metal fiber medium 300 as subject of the invention comprising one pleat 301 is schematically shown in FIGURE 3a and FIGURE 3b. FIGURE 3b is a cross section of the sintered metal fiber medium from FIGURE 3a, according to the plane BB'.

The pleat 301 comprises a first leg 320, a second leg 330 and a bending part 340. The first leg 320 is present according to a plane 321 and the second leg 330 is present according to a second plane 331. At the intersection 350 of the planes 321 and 331, a dihedral angle $\theta$ may be measured.

At the legs 320 and 330, the sintered metal fiber medium has an average medium thickness Tl. As shown in FIGURE 3a, the bending part of the pleat comprises two linear zone 361 and 362. In these zones a minimal thickness Tb can be measured, which minimal thickness Tb is preferable substantially equal for each cross section perpendicular to the length of the linear zone.

An embodiment was provided using a sintered metal fiber medium identical as the sintered metal fiber medium as in the embodiment shown in FIGURE 1 a and FIGURE 1b. The medium was provided with a pleat which comprises a bending zone, in which the thickness was reduced by pressing two substantially parallel wire rods with diameter. 2mm in the medium over a depth of 0.95 mm or more. The width W of the linear zone is 1.99mm up to 2mm. The cross section of the bending zone 340 show the imprints of the circular circumference of the wire rods. Tb measured in the linear zones 361 and 362 is 0.45mm or less. The metal fiber medium 300 could be bend easily providing a dihedral angle θ between the planes 321 and 331 defined by the two legs 320 and 330, which θ ranges from 180°to approximately 0°, without creation of cracks at the outer surface 370 of the medium in the bending part. Bulging 380 of metal fibers at the inner side 371 of the pleat was noticed. This could be reduced by choosing the distance D between the adjacent linear zones 361 and 362 larger than W.

A method for providing a sintered metal fiber medium as subject of the invention is schematically shown in FIGURE 4a, FIGURE 4b and FIGURE 4c.

In a fist step, indicated FIGURE 4a, a sintered metal fiber medium 400 is provided, which has an average thickness TI.

In a next step, indicated FIGURE 4b, the thickness of the sintered metal fiber medium 400 is reduced over a linear zone 401, by pressing a mould 404 into the surface 402 of the sintered metal fiber medium 400. A minimum thickness Tb in the linear zone 401 can be measured. The linear zone 401 has a width W.

In the next step, indicted FIGURE 4c, the two legs 431 and 432 are brought to each other by bending the two legs using the linear zone 401 as bending axis 433. the bending is executed until the two planes 441 and 442 are under a dihedral angle θ.

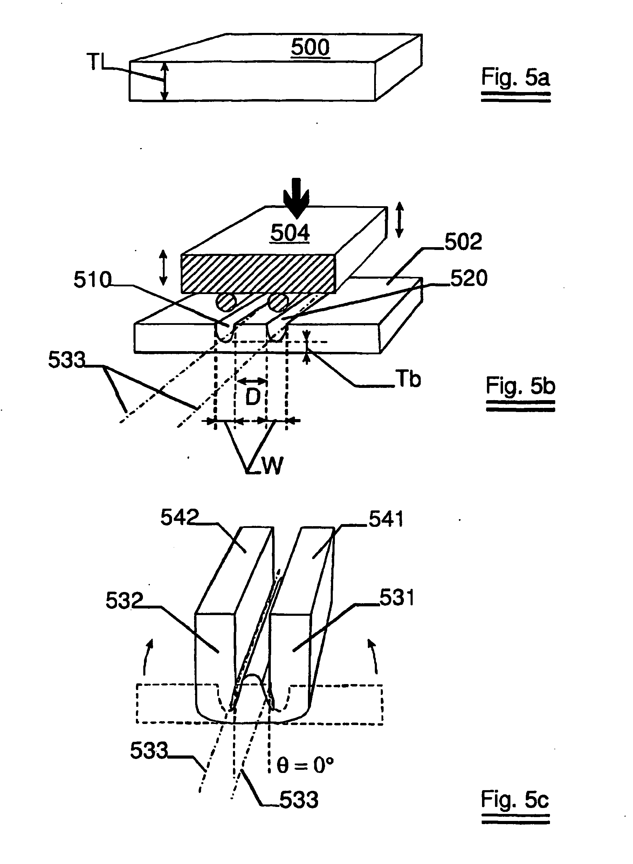

An alternative method to provide a sintered metal fiber medium as subject of the invention is schematically shown in FIGURE 5a, FIGURE 5b and FIGURE 5c.

In a fist step, indicated FIGURE 5a, a sintered metal fiber medium 500 is provided, which has an average thickness TI.

In a next step, indicated FIGURE 5b, the thickness of the sintered metal fiber medium 500 is reduced over two substantially parallel linear zones 510 and 520, by pressing a mould 504 into the surface 502 of the sintered metal fiber medium 500, which mould has two thicker zones in the form of the two recessions to be pressed into the medium. A minimum thickness Tb in the linear zones 510 and 520 can be measured. The linear zones 510 and 520 have a width W and are on a distance D.

In the next step, indicted FIGURE 5c, the two legs 531 and 532 are brought to each other by bending the two legs using the linear zones 510 and 520 as so to say bending axis 533. The bending is executed until the two planes 541 and 542 are under a dihedral angle θ.

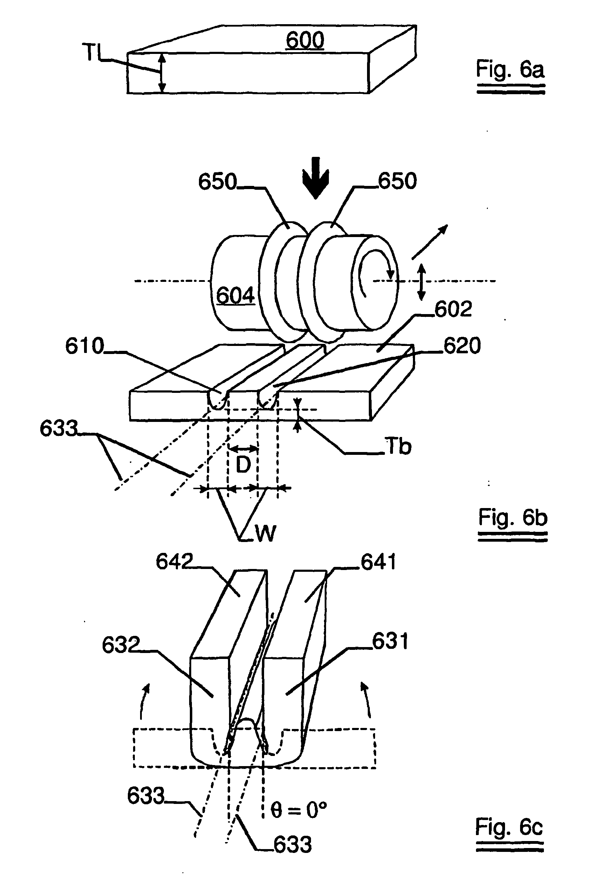

An other alternative method to provide a sintered metal fiber medium as subject of the invention is schematically shown in FIGURE 6a, FIGURE 6b and FIGURE 6c.

In a fist step, indicated FIGURE 6a, a sintered metal fiber medium 600 is provided, which has an average thickness TI.

In a next step, indicated FIGURE 6b, the thickness of the sintered metal fiber medium 600 is reduced over two substantially parallel linear zones 610 and 620, by pressing a rotatable wheel 604 into the surface 602 of the sintered metal fiber medium 600 and rolling it in the direction of the bending axis 633 of the linear zones. The wheel 604 has two thicker circumferential zones 650 in the form of the two recessions to be pressed Into the medium. A minimum thickness Tb in the linear zones 610 and 620 can be measured. The linear zones 610 and 620 have a width W and are on a distance D.

In the next step, indicted FIGURE 6c, the two legs 631 and 632 are brought to each other by bending the two legs using the linear zones 610 and 620 as so to say bending axis 633. The bending is executed until the two planes 641 and 642 are under a dihedral angle θ.

## Claims

1. A sintered metal fiber medium (100, 300, 500)) comprising at least one pleat (101, 201, 301), said pleat (101) comprising a first leg (120), said first leg (120) being present according to a first plane (121), said pleat comprising a second leg (130) being present according to a second plane (131), said first plane (121) and said second plane (131) intersecting along an intersection line (160) at a dihedral angle θ, said pleat (101) comprising a bending part (140) for coupling said first (120) and said second leg (130), said medium (100) having an average thickness at said legs of TI, said bending part comprises at least a first distinct linear zone (160) being substantially parallel to said intersecting line, in which first linear zone (160, 361, 510)) said medium having a minimum thickness Tb, said Tb is smaller than said TI, **characterized in that** Tb is smaller than 0.5 times TI.

2. A sintered metal fiber medium (100, 300, 500) as in claim 1, wherein Tb is smaller or equal to 0.45 times TI.

3. A sintered metal fiber medium (100, 300, 500) according to any one of claims 1 to 2, wherein said first linear zone (160, 361, 510) has a width W being larger than or equal to TI-Tb.

4. A sintered metal fiber medium (100, 300, 500) according to any one of claims 1 to 3, wherein said bending part (140) comprises only one distinct zone (160).

5. A sintered metal fiber medium (100, 300, 500) according to claim 4, wherein said dihedral angle θ is smaller than 180°, said dihedral angle θ being larger than 90°.

6. A sintered metal fiber medium (100, 300, 500) according to any one of claims 1 to 3, wherein said bending part (140) comprises a second distinct zone (362, 520), said zones (361, 362, 510, 520 being substantially parallel to each other.

7. A sintered metal fiber medium (100, 300, 500) according to claim 6, wherein said dihedral angle θ is smaller than 90°.

8. A sintered metal fiber medium (100, 300, 500) according to any one of claims 6 to 7, wherein minimum thickness Tb is substantially equal to the minimum thickness of said second zone (362, 520).

9. A sintered metal fiber medium (100, 300, 500) according to any one of claims 6 to 8, wherein said width W is substantially equal to width of said second zone (362, 520).

10. A sintered metal fiber medium (100, 300, 500) according to any one of claims 6 to 9, wherein the distance D between said first and said second liner zones (510, 520) is equal or larger than the largest of said width W of said first zone and (510) the width of said second zone (520).

11. A sintered metal fiber medium (100, 300, 500) according to claim 10, wherein D is in the range of W to 5 times Tl.

12. A method to pleat a sintered metal fiber medium (100, 300, 500), said method comprising the steps of

   • providing a sintered metal fiber medium (100, 300, 500) having a thickness Tl;
   • reducing the medium thickness over at least a first linear zone (160) to a thickness Tb, Tb being the minimum thickness measured at said linear zone (160), said Tb being smaller than 0.5 times Tl;
   • bending the medium parts present at both sides of said linear zone (160) to the same side of the medium, using said linear zone (160) as bending axes, in order to obtain a first legs being present according to a first plane (121) and a second leg (130) being present according to a second plane (131), said first and said second plane (131) intersecting along an intersection line (150) at a dihedral angle θ.

13. A method to pleat a sintered metal fiber medium (100, 300, 500) as in claim 12, wherein Tb is smaller of equal to 0.45 times Tl.

14. A method to pleat a sintered metal fiber medium (100, 300, 500) as in any one of the claims 12 to 13, wherein said first linear zone (160) has a width W being larger or equal to Tl-Tb.

15. A method to pleat a sintered metal fiber medium (100, 300, 500) as in any one of the claims 12 to 14, wherein said dihedral angle θ is smaller than 180°, said dihedral angle θ being larger than 90°.

16. A method to pleat a sintered metal fiber medium (100, 300, 500) as in any one of the claims 12 to 15, wherein said medium thickness is reduced over a first (361, 510) and a second linear zone (362, 520), said linear zones (361, 362, 510, 520) being substantially parallel.

17. A method to pleat a sintered metal fiber medium (100, 300, 500) as in claim 16, wherein said dihedral angle θ is smaller than 90°.

18. A method to pleat a sintered metal fiber medium (100, 300, 500) as in any one of the claims 15 to 17, wherein said first linear zone (361, 510) and said second linear zone (362, 520) have a width being larger or equal to Tl-Tb.

19. A method to pleat a sintered metal fiber medium (100, 300, 500) as in any one of the claims 15 to 18, wherein said widths of said first (361, 510) and said second linear zone (362, 520) are substantially equal.

20. A method to pleat a sintered metal fiber medium (100, 300, 500) as in any one of the claims 15 to 19, wherein the distance D between said linear zones (510, 520) is equal or larger than the largest of said width of said first zone (510) and the width of said second zone (520).

21. A method to pleat a sintered metal fiber medium (100, 300, 500) as in claim 20, wherein D is in the range of W to 5 times Tl.

**Patentansprüche**

1. Gesintertes Metallfasermedium (100, 300, 500), das mindestens einen Falz (101, 201, 301) umfasst, wobei der Falz (101) einen ersten Schenkel (120) umfasst, wobei der erste Schenkel (120) entsprechend einer ersten Ebene (121) vorhanden ist, wobei der Falz einen zweiten Schenkel (130) umfasst, der entsprechend einer zweiten Ebene (131) vorhanden ist, wobei die erste Ebene (121) und die zweite Ebene (131) sich entlang einer Schnittlinie (160) unter einem Flächenwinkel θ schneiden, wobei der Falz (101) einen Biegeabschnitt (140) zum Verbinden des ersten (120) und des zweiten Schenkels (130) umfasst, wobei das Medium (100) eine durchschnittliche Dicke an den Schenkeln von Tl hat, wobei der Biegeabschnitt mindestens eine erste ausgeprägte lineare Zone (160) hat, die im Wesentlichen parallel zur Schnittlinie ist, wobei in dieser ersten linearen Zone (160, 361, 510) das Medium eine Mindestdicke Tb hat, wobei Tb kleiner als Tl ist, **dadurch gekennzeichnet, dass** Tb kleiner als 0,5 x Tl ist.

2. Gesintertes Metallfasermedium (100, 300, 500) nach Anspruch 1, wobei Tb kleiner oder gleich 0,45 x Tl ist.

3. Gesintertes Metallfasermedium(100, 300, 500) nach einem der Ansprüche 1 bis 2, wobei die erste lineare Zone (160, 361, 510) eine Breite W hat, die größer oder gleich Tl-Tb ist.

4. Gesintertes Metallfasermedium (100, 300, 500) nach einem der Ansprüche 1 bis 3, wobei der Biegeabschnitt (140) nur eine ausgeprägte Zone (160) hat.

5. Gesintertes Metallfasermedium (100, 300, 500) nach Anspruch 4, wobei der Flächenwinkel θ kleiner als 180° ist, wobei der Flächenwinkel θ größer als 90° ist.

6. Gesintertes Metallfasermedium (100, 300, 500) nach einem der Ansprüche 1 bis 3, wobei der Biegeabschnitt (140) eine zweite ausgeprägte Zone (362, 520) umfasst, wobei die Zonen (361, 362, 510, 520) im Wesentlichen parallel zueinander sind.

7. Gesintertes Metallfasermedium (100, 300, 500) nach Anspruch 6, wobei der Flächenwinkel θ kleiner als 90° ist.

8. Gesintertes Metallfasermedium (100, 300, 500) nach einem der Ansprüche 6 bis 7, wobei die Mindestdicke Tb im Wesentlichen gleich der Mindestdicke der zweiten Zone (362, 520) ist.

9. Gesintertes Metallfasermedium (100, 300, 500) nach einem der Ansprüche 6 bis 8, wobei die Breite W im Wesentlichen gleich der Breite der zweiten Zone (362, 520) ist.

10. Gesintertes Metallfasermedium (100, 300, 500) nach einem der Ansprüche 6 bis 9, wobei der Abstand D zwischen der ersten und zweiten linearen Zone (510, 520) gleich oder größer als die größte aus der Breite W der ersten Zone (510) und der Breite der zweiten Zone (520) ist.

11. Gesintertes Metallfasermedium (100, 300, 500) nach Anspruch 10, wobei D im Bereich von W bis 5 mal Tl ist.

12. Verfahren zum Falzen eines gesinterten Metallfasermediums (100, 300, 500), wobei das Verfahren die folgenden Schritte umfasst

• Bereitstellen eines gesinterten Metallfasermediums (100, 300, 500), das eine Dicke Tl hat;
• Reduzieren der Mediendicke über eine erste lineare Zone (160) auf eine Dicke Tb, wobei Tb die Mindestdicke ist, die an der linearen Zone (160) gemessen ist, wobei Tb kleiner als 0,5 x Tl ist;
• Biegen der Mediumsteile, die auf beiden Seiten der linearen Zone (160) vorhanden sind, zur selben Seite des Mediums, wobei die lineare Zone (160) als Biegeachse verwendet wird, um einen ersten Schenkel zu erhalten, der entsprechend der ersten Ebene (121) vorhanden ist, und einen zweiten Schenkel (130), der entsprechend einer zweiten Ebene (131) vorhanden ist, wobei die erste und zweite Ebene (131) sich entlang einer Schnittlinie (150) unter einem Flächenwinkel θ schneiden.

13. Verfahren zum Falzen eines gesinterten Metallfasermediums (100, 300, 500) nach Anspruch 12, wobei Tb kleiner oder gleich 0.45 x Tl ist.

14. Verfahren zum Falzen eines gesinterten Metallfasermediums (100, 300, 500) nach einem der Ansprüche 12 bis 13, wobei die erste lineare Zone (160) eine Breite W hat, die größer oder gleich Tl-Tb ist.

15. Verfahren zum Falzen eines gesinterten Metallfasermediums (100, 300, 500) nach einem der Ansprüche 12 bis 14, wobei der Flächenwinkel θ kleiner als 180° ist, wobei der Flächenwinkel θ größer als 90° ist.

16. Verfahren zum Falzen eines gesinterten Metallfasermediums (100, 300, 500) nach einem der Ansprüche 12 bis 15, wobei die Mediendicke über eine erste (361, 510) und eine zweite lineare Zone (362, 520) reduziert ist, wobei die linearen Zonen (361, 362, 510, 520) im Wesentlichen parallel sind.

17. Verfahren zum Falzen eines gesinterten Metallfasermediums (100, 300, 500) nach Anspruch 16, wobei der Flächenwinkel θ kleiner als 90° ist.

18. Verfahren zum Falzen eines gesinterten Metallfasermediums (100, 300, 500) nach einem der Ansprüche 15 bis 17, wobei die erste lineare Zone (361, 510) und die zweite lineare Zone (362, 520) eine Breite W haben, die größer oder gleich Tl-Tb ist.

19. Verfahren zum Falzen eines gesinterten Metallfasermediums (100, 300, 500) nach einem der Ansprüche 15 bis 18, wobei die Breite der ersten linearen Zone (361, 510) und der zweiten linearen Zone (362, 520) im Wesentlichen gleich sind.

20. Verfahren zum Falzen eines gesinterten Metallfasermediums (100, 300, 500) nach einem der Ansprüche 15 bis 19, wobei der Abstand D zwischen den linearen Zonen (510, 520) größer oder gleich dem größten Wert aus Breite der ersten Zone (510) und Breite der zweiten Zone (520) ist.

21. Verfahren zum Falzen eines gesinterten Metallfasermediums (100, 300, 500) nach Anspruch 20, wobei D im Bereich von W bis 5 x Tl ist.

**Revendications**

1. Milieu plissé en fibres de métal frittées (100, 300, 500) comprenant au moins un pli (101, 201, 301), ledit pli (101) comportant une première aile (120), ladite première aile (120) se situant dans un premier plan (121), ledit pli comportant une deuxième aile (130) se situant dans un deuxième plan (131), ledit premier plan (121) et ledit deuxième plan (131) se coupant selon une ligne d'intersection (160) sous un angle dièdre θ, ledit pli (101) comprenant une partie courbe (140) pour coupler ladite première aile (120) et ladite deuxième aile (130), ledit milieu (100) présentant une épaisseur moyenne auxdites ailes de Tl, ladite partie courbe comprenant au moins une première zone linéaire distincte (160) qui est sensiblement parallèle à ladite ligne d'intersection, première zone linéaire (160, 361, 510) dans laquelle ledit milieu présente une épaisseur minimale Tb, ladite Tb étant inférieure à ladite Tl, **caractérisé en ce que** Tb est inférieure à 0,5 fois Tl.

2. Milieu en fibres de métal frittées (100, 300, 500) selon la revendication 1, dans lequel Tb est inférieure ou égale à 0,45 fois Tl.

3. Milieu en fibres de métal frittées (100, 300, 500) selon l'une quelconque des revendications 1 à 2, dans lequel ladite première zone linéaire (160, 361, 510) présente une largeur W qui est supérieure ou égale à Tl-Tb.

4. Milieu en fibres de métal frittées (100, 300, 500) selon l'une quelconque des revendications 1 à 3, dans lequel ladite partie courbe (140) ne comprend qu'une seule zone distincte (160).

5. Milieu en fibres de métal frittées (100, 300, 500) selon la revendication 4, dans lequel ledit angle dièdre θ est inférieur à 180°, ledit angle dièdre θ étant supérieur à 90°.

6. Milieu en fibres de métal frittées (100, 300, 500) selon l'une quelconque des revendications 1 à 3, dans lequel ladite partie courbe (140) comprend une deuxième zone distincte (362, 520), lesdites zones (361, 362, 510, 520) étant sensiblement parallèles les unes aux autres.

7. Milieu en fibres de métal frittées (100, 300, 500) selon la revendication 6, dans lequel ledit angle dièdre θ est inférieur à 90°.

8. Milieu en fibres de métal frittées (100, 300, 500) selon l'une quelconque des revendications 6 à 7, dans lequel l'épaisseur minimale Tb est sensiblement égale à l'épaisseur minimale de ladite deuxième zone (362, 520).

9. Milieu en fibres de métal frittées (100, 300, 500) selon l'une quelconque des revendications 6 à 8, dans lequel ladite largeur W est sensiblement égale à la largeur de ladite deuxième zone (362, 520).

10. Milieu en fibres de métal frittées (100, 300, 500) selon l'une quelconque des revendications 6 à 9, dans lequel la distance D entre lesdites première et deuxième zones linéaires (510, 520) est égale ou supérieure à la plus grande de ladite largeur W de ladite première zone (510) et la largeur de ladite deuxième zone (520).

11. Milieu en fibres de métal frittées (100, 300, 500) selon la revendication 10, dans lequel D se situe dans la plage de W à 5 fois Tl.

12. Procédé pour plisser un milieu en fibres de métal frittées (100, 300, 500), ledit procédé comprenant les étapes consistant à

• procurer un milieu en fibres de métal frittées (100, 300, 500) présentant une épaisseur Tl;
• réduire l'épaisseur du milieu sur au moins une première zone linéaire (160) jusqu'à une épaisseur Tb, Tb étant l'épaisseur minimale mesurée à ladite zone linéaire (160), ladite Tb étant inférieure à 0,5 fois Tl;
• courber les parties du milieu situées sur les deux côtés de ladite zone linéaire (160) vers le même côté du milieu, en utilisant ladite zone linéaire (160) comme axe de courbure, afin d'obtenir une première aile se situant dans un premier plan (121) et une deuxième aile (130) se situant dans un deuxième plan (131), ledit premier plan (121) et ledit deuxième plan (131) se coupant selon une ligne d'intersection (150) sous un angle dièdre θ.

13. Procédé pour plisser un milieu en fibres de métal frittées (100, 300, 500) selon la revendication 12, dans lequel Tb est inférieure ou égale à 0,45 fois Tl.

14. Procédé pour plisser un milieu en fibres de métal frittées (100, 300, 500) selon l'une quelconque des revendications 12 à 13, dans lequel ladite première zone linéaire (160) présente une largeur W qui est supérieure ou égale à Tl-Tb.

**15.** Procédé pour plisser un milieu en fibres de métal frittées (100, 300, 500) selon l'une quelconque des revendications 12 à 14, dans lequel ledit angle dièdre θ est inférieur à 180°, ledit angle dièdre θ étant supérieur à 90°.

**16.** Procédé pour plisser un milieu en fibres de métal frittées (100, 300, 500) selon l'une quelconque des revendications 12 à 15, dans lequel l'épaisseur dudit milieu est réduite sur une première zone linéaire (361, 510) et sur une deuxième zone linéaire (362, 520), lesdites zones linéaires (361, 362, 510, 520) étant sensiblement parallèles.

**17.** Procédé pour plisser un milieu en fibres de métal frittées (100, 300, 500) selon la revendication 16, dans lequel ledit angle dièdre θ est inférieur à 90°.

**18.** Procédé pour plisser un milieu en fibres de métal frittées (100, 300, 500) selon l'une quelconque des revendications 15 à 17, dans lequel ladite première zone linéaire (361, 510) et ladite deuxième zone linéaire (362, 520) présentent une largeur qui est supérieure ou égale à Tl-Tb.

**19.** Procédé pour plisser un milieu en fibres de métal frittées (100, 300, 500) selon l'une quelconque des revendications 15 à 18, dans lequel lesdites largeurs de ladite première zone linéaire (361, 510) et de ladite deuxième zone linéaire (362, 520) sont sensiblement égales.

**20.** Procédé pour plisser un milieu en fibres de métal frittées (100, 300, 500) selon l'une quelconque des revendications 15 à 19, dans lequel la distance D entre lesdites zones linéaires (510, 520) est égale ou supérieure à la plus grande de ladite largeur de ladite première zone (510) et la largeur de ladite deuxième zone (520).

**21.** Procédé pour plisser un milieu en fibres de métal frittées (100, 300, 500) selon la revendication 20, dans lequel D se situe dans la plage de W à 5 fois Tl.

Fig. 1a

Fig. 1b

Fig. 2

Fig. 3a

Fig. 3b

Fig. 4a

Fig. 4b

Fig. 4c

**TL** **500**

Fig. 5a

**504** **502** **520**
**510** **533** **D** **W** **Tb**

Fig. 5b

**542** **541**
**532** **531**
**533** $\theta = 0°$
**533**

Fig. 5c

TL

600

<u>Fig. 6a</u>

650      650

604

602

610      620

633      Tb

D

W

<u>Fig. 6b</u>

642      641

632      631

633

θ = 0°

633

<u>Fig. 6c</u>

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6276045 B1
- JP 3083144 B